# EUROPÄISCHE PATENTSCHRIFT

(11) **EP 0 793 090 B1**
(45) Veröffentlichungstag und Bekanntmachung des Hinweises auf die Patenterteilung: **11.10.2000**
(21) Anmeldenummer: 97890024.9
(22) Anmeldetag: 12.02.1997
(51) Int. Cl.: G01N 21/64

(54) **Messanordnung mit einem für Anregungs- und Messstrahlung transparentem Trägerelement**
Measuring system with probe carrier transparent for excitation and measurement beam
Système de mesure avec un élément de support transparent pour le faisceau d'exitation et de détection

(30) Priorität: 29.02.1996 AT 38396
(43) Veröffentlichungstag der Anmeldung: 03.09.1997
(60) Teilanmeldung: 99124388.2
(73) Patentinhaber: AVL Medical Instruments AG, 8207 Schaffhausen (CH)
(72) Erfinder: Hartmann, Paul, Dipl.-Ing., Dr., 8160 Weiz (AT); Ziegler, Werner, Dipl.-Ing., 8043 Graz (AT); Karpf, Hellfried, Dr., 8043 Graz (AT); Harer, Johann, Dipl.-Ing., Dr., 8010 Graz (AT)
(74) Vertreter: Babeluk, Michael, Dipl.-Ing. Mag.

(56) Entgegenhaltungen:
- AT-B- 383 684
- US-A- 5 577 137
- SENSORS AND ACTUATORS B, Bd. B29, Nr. 1/03, 1.Oktober 1995, Seiten 169-173, XP000541435 LEINER M J P: "OPTICAL SENSORS FOR IN VITRO BLOOD GAS ANALYSIS"
- PATENT ABSTRACTS OF JAPAN vol. 013, no. 091 (P-837), 3.März 1989 & JP 63 273042 A (DAIKIN IND LTD), 10.November 1988,

## Beschreibung

Die Erfindung betrifft eine Meßanordnung mit zumindest einer Strahlungsquelle zur Bereitstellung einer Anregungsstrahlung, mit einem ersten lumineszenzoptischen Sensorelement, mit zumindest einem Detektor, einer Auswerteeinheit zur Detektion einer Meßstrahlung und einem für die Anregungs- und die Meßstrahlung transparenten Trägerelement, welches eine erste Grenzfläche zur Anbringung des lumineszenzoptischen Sensorelementes, eine zweite Grenzfläche zur Aufnahme der Anregungsstrahlung sowie eine dritte Grenzfläche zur Abgabe der Meßstrahlung des Sensorelementes an den Detektor aufweist, wobei die Richtung der Anregungsstrahlung mit der Detektionsrichtung einen Winkel zwischen 60° und 120°, vorzugsweise einen Winkel von im wesentlichen 90°, einschließt und der Brechungsindex des Trägerelementes größer ist, als jener der Umgebung.

Eine Meßanordnung der eingangs genannten Art ist beispielsweise aus der AT-B 383 684 bekannt geworden. Ein transparentes Trägerelement dieser Meßanordnung mit planparallelen Begrenzungsflächen weist auf einer dieser Flächen eine Sensorschicht auf, wobei diese Sensorschicht von einer Strahlungsquelle mit Anregungsstrahlung beaufschlagt wird. Das Licht der Strahlungsquelle fällt durch eine Blendeneinrichtung auf die Sensorschicht, wobei die entstehende Meßstrahlung im wesentlichen normal zur Richtung der Anregungsstrahlung zu einem an einer seitlichen Begrenzungsfläche des Trägerelementes angeordneten Detektor abgeführt wird. Die Lichtleitung im Trägerelement erfolgt im wesentlichen durch Totalreflexion der Meßstrahlung an den Begrenzungsflächen des Trägerelementes. An der Begrenzungsfläche mit der Sensorschicht ist eine Meßgutkammer angeordnet, welche über einen Einlaß und einen Auslaß für die Probe verfügt und von der zu messenden Probe durchspült werden kann. Die Probe bzw. der zu vermessende Analyt in der Probe verändert eine optische Eigenschaft des Lumineszenzindikators in der Sensorschicht, wodurch sich die vom Detektor erfaßte Meßstrahlung in funktionaler Abhängigkeit von der Analytkonzentration ändert.

Aus der EP-B1 0 354 895 ist ein Einwegmeßelement zur gleichzeitigen Vermessung mehrerer unterschiedlicher Probenbestandteile bekannt, welches aus einem Sensorteil und einem damit verbundenen Probennahmeteil besteht. Der Sensorteil weist einen Probenkanal auf, in welchem mehrere Sensoren angeordnet sind. Die Anregung der Sensoren bzw. die Detektion der Meßstrahlung erfolgt über Lichtleiter zu jedem einzelnen der Sensoren, wobei die Auswertung der Lichtsignale in einer nicht weiter dargestellten Anregungs- und Meßeinrichtung erfolgt.

Aus der US-A 4 968 632 ist ein Verfahren und eine Vorrichtung für die rasche Analyse einer Probe bekannt. Eine Probenkammer mit transparenten, gegenüberliegenden Wänden ist an der Innenseite mit einem Lumineszenzindikator versehen, welcher in einer Indikatorschicht angeordnet ist. Die von mehreren Lichtquellen emittierte Anregungsstrahlung gelangt durch eine transparente Wand der Meßkammer auf die Probe, beispielsweise ein zu messendes Gas, welches mit der Indikatorschicht wechselwirkt. Im Bereich der Indikatorschicht sind mehrere Filter angeordnet, welche jeweils nur einen bestimmten Anteil der Meßstrahlung herausfiltern, wobei pro Filter eine Photodiode zur Erfassung der Meßstrahlung vorgesehen ist. Aufgrund charakteristischer Änderungen in den einzelnen Spektren kann dann auf die Meßgröße geschlossen werden.

Ein Sensorelement für die gleichzeitige Bestimmung der Konzentration mehrerer Substanzen in einer Probe wird auch in der US-A 5 039 490 beschrieben. In einem mehrschichtig aufgebauten Sensorelement befinden sich nebeneinander angeordnete photosensitive Elemente und lichtemittierende Quellen, welche durch eine transparente Koppelschicht abgedeckt sind. Auf dieser Koppelschicht befindet sich die Indikatorschicht, welche ihrerseits mit einer mit der Probe in Kontakt stehenden Deckschicht abgedeckt sein kann. Das relativ kompliziert aufgebaute Sensorelement benötigt Filter oder optische Gitter, um eine Rückstreuung des Anregungslichtes in die photosensitiven Elemente zu vermeiden. Durch die Verwendung unterschiedlicher Indikatorsubstanzen für einzelne photosensitive Elemente können gleichzeitig mehrere unterschiedliche Probenbestandteile vermessen werden.

Weiters ist aus M.J.P. LEINER, Sensors and Actuators B29 (1995) 169 - 173 unter dem Titel "Optical sensors for in vitro blood gas analysis" eine Meßkammer zur gleichzeitigen Messung von pH, PCO₂ und PO₂ im Blut bekannt geworden, wobei die Meßkammer als Durchflußmeßzelle ausgebildet ist. Diese besteht im wesentlichen aus zwei Spritzgussteilen aus einem für die Anregungs- und Meßstrahlung der verwendeten lumineszenzoptischen Sensoren transparenten Plastikmaterial. An den stirnseitigen Enden der Meßzelle sind Anschlüsse für den Probenzu- bzw. Probenablauf angeformt. Der Basisteil der Meßkammer weist in einem Sensorbereich drei zylindrische Vertiefungen zur Aufnahme der Sensorelemente auf. Im Deckteil der Meßkammer befindet sich eine nutförmige Vertiefung, welche zusammen mit dem Basisteil den Meßkanal bildet, welcher in etwa 40 pl Probenvolumen aufweist. Die Anregung des Lumineszenzindikators in den einzelnen lumineszenzoptischen Sensorelementen, sowie die Detektion der Lumineszenzstrahlung erfolgt über Lichtleiter, welche auf den Basisteil der Messkammer gerichtet sind.

Aufgabe der vorliegenden Erfindung ist es, ausgehend vom genannten Stand der Technik eine Meßanordnung vorzuschlagen, welche einfach und billig herzustellen ist, wobei ohne Verwendung von Filtern und optischen Gittern im Trägerelement gleichzeitig mehrere unterschiedliche Probenbestandteile vermessen werden können. Eine weitere Forderung besteht darin, das Trägerelement der Meßanordnung als Einwegelement auszubilden.

Diese Aufgabe wird erfindungsgemäß dadurch gelöst, daß auf der ersten Grenzfläche zumindest ein weiteres, vorzugsweise vom ersten unterschiedliches, durch einen gemeinsamen Probenkanal verbundenes, lumineszenzoptisches Sensorelement angeordnet ist, sowie daß im Trägerelement eine Einrichtung zur optischen Trennung der Lichtwege der Meßstrahlung der einzelnen Sensorelemente vorgesehen ist.

Vorteilhafterweise wird somit nicht nur die Anregungsstrahlung durch unterschiedliche optische Lichtwege von der Meßstrahlung sondern auch die von den einzelnen Sensorelementen jeweils emittierte Meßstrahlung durch im folgenden näher beschriebene optische und zeitliche Trennung der Lichtwege separiert. Durch diese Maßnahme kann auf optische Filter oder optische Gitterstrukturen im Trägerelement verzichtet werden.

In einer ersten Ausführungsvariante der Erfindung ist vorgesehen, daß die Einrichtung zur optischen Trennung der Lichtwege der von den einzelnen Sensorelementen ausgehenden Meßstrahlung aus Einschnürungen, Ausnehmungen und/oder für die Meßstrahlung undurchlässigen Schichten oder Bereichen des Trägerelementes besteht, welche entlang des Probenkanales angeordnet sind und jeweils normal zu diesem verlaufen, wobei jedem Sensorelement ein Detektor der Auswerteeinheit zugeordnet ist. Dabei können die Einschnürungen des Trägerelementes im wesentlichen eine Kammstruktur bilden, an deren seitlicher Basis die einzelnen Sensorelemente angeordnet sind, wobei die Kammstruktur im Bereich jedes Sensorelementes einen im wesentlichen prismatischen Fortsatz aufweist, dessen Stirnfläche einem Detektor zugeordnet ist.

In einer anderen Ausführungsvariante ist vorgesehen, daß die Einrichtung zur optischen Trennung der Lichtwege zumindest ein optoelektronisches Schaltelement im Trägerelement aufweist, welche Schaltelemente jeweils im Lichtweg der Meßstrahlung zwischen Sensorelement und Detektor angeordnet sind und jeweils nur einen Lichtweg eines Sensorelementes zum Detektor der Auswerteeinheit freigeben.

In einer besonders vorteilhaften Ausgestaltung der Erfindung kann jedem Sensorelement eine separate Strahlungsquelle sowie allen Sensorelementen ein gemeinsamer Detektor zugeordnet sein.

Die separaten Strahlungsquellen können dabei mit einer elektronischen Steuereinrichtung verbunden sein, welche eine zeitlich versetzte Abgabe von Anregungsstrahlung ermöglicht (Multiplexverfahren), sodaß die Trennung der Lichtwege der Meßstrahlung jedes Sensorelementes durch zeitlich versetzte Anregung der Sensorelement erfolgt.

Eine weitere Ausführungsvariante zeichnet sich dadurch aus, daß eine elektronische Einrichtung zur periodischen Modulation der Anregungsstrahlung, welche mit den separaten Strahlungsquellen verbunden ist, eine Einrichtung zur periodisch modulierten Erfassung der Meßstrahlung, welche mit dem Detektor verbunden ist sowie eine Einrichtung zur Messung des Phasenwinkels und/oder der Demodulation zwischen Anregungs- und Meßstrahlung vorgesehen ist. Die Abklingzeit bzw. deren Änderung kann somit auch aus der Demodulation, d. h. der Reduktion der Amplitude der Meßstrahlung gegenüber der Anregungsstrahlung, gewonnen werden.

Weiters ist in einer erfindungsgemäßen Variante vorgesehen, daß alle Sensorelemente mit einer gemeinsamen, gepulsten Strahlungsquelle sowie mit einem gemeinsamen Detektor in optischer Verbindung stehen, wobei der Detektor zur Trennung der Lichtwege der Meßstrahlung jedes Sensorelementes mit einer Einrichtung zur zeitlich versetzten Detektierung der Meßstrahlung verbunden ist. Die Trennung der Lichtwege kann auch durch eine nachgeschaltete Einheit zur mathematischen Auftrennung der Abklingzeitfunktionen der einzelnen Sensorelemente erfolgen. In dieser einfachen Ausführungsvariante kann für mehrere Sensorelemente eine Strahlungsquelle sowie ein gemeinsamer Detektor verwendet werden.

Eine gepulste Anregung mit nachfolgender Abklingzeitmessung kann auch in jenen Fällen vorteilhaft angewandt werden, wo jedem Sensorelement eine separate Strahlungsquelle zugeordnet ist. Eine derartige Ausführungsvariante ist gekennzeichnet durch eine Einrichtung zur gepulsten Anregung der Sensorelemente, welche mit den separaten Strahlungsquellen verbunden ist sowie eine Einrichtung zur zeitaufgelösten Erfassung der Meßstrahlung, welche mit dem Detektor in Verbindung steht.

Weiters kann bei Ausführungsvarianten, wo alle Sensorelemente mit einem gemeinsamen Detektor in optischer Verbindung stehen, dieser Detektor auch die Abklingzeitprofile aller Sensorelemente gleichzeitig erfassen, wobei dann die Auswerteeinrichtung eine Einheit zur mathematischen Auftrennung der Abklingzeitfunktionen der einzelnen Sensorelemente aufweist. Bei dieser Ausführungsvariante ist jedoch die Zahl der Sensorelemente beschränkt und davon abhängig, inwieweit die mittleren Zeitkonstanten der Abklingzeiten der einzelnen Sensorelemente unterschiedlich sind. Gute Meßergebnisse können dann erzielt werden, wenn sich die mittleren Zeitkonstanten der Abklingzeiten zumindest um einen Faktor zwei unterscheiden.

Das Trägerelement kann für eine Lichtleitung zwischen den Sensorelementen und dem Detektor bzw. den Detektoren mittels Totalreflexion geeignet sein. Es sind jedoch auch Ausführungsvarianten denkbar, wo zusätzlich auch die Anregungsstrahlung zwischen Lichtquelle und den Sensorelementen mittels Totalreflexion im Trägerelement geführt wird.

Das Trägerelement kann in allen Ausführungsvarianten samt Sensorelementen und Probenkanal als kostengünstiges Einwegelement ausgebildet sein, dessen Grenzflächen nach dem Einlegen in ein Meßgerät als Kontaktflächen für die im Meßgerät angeordneten Strahlungsquellen bzw. Detektoren dienen.

Die Erfindung wird im folgenden anhand von schematischen Darstellungen näher erläutert. Es zeigen Fig. 1 und Fig. 2 erfindungsgemäße Meßanordnungen mit für jedes Sensorelement separaten Detektoren, sowie die Fig. 4 und die Fig. 6 weitere vorteilhafte Ausführungsvarianten der Erfindung.

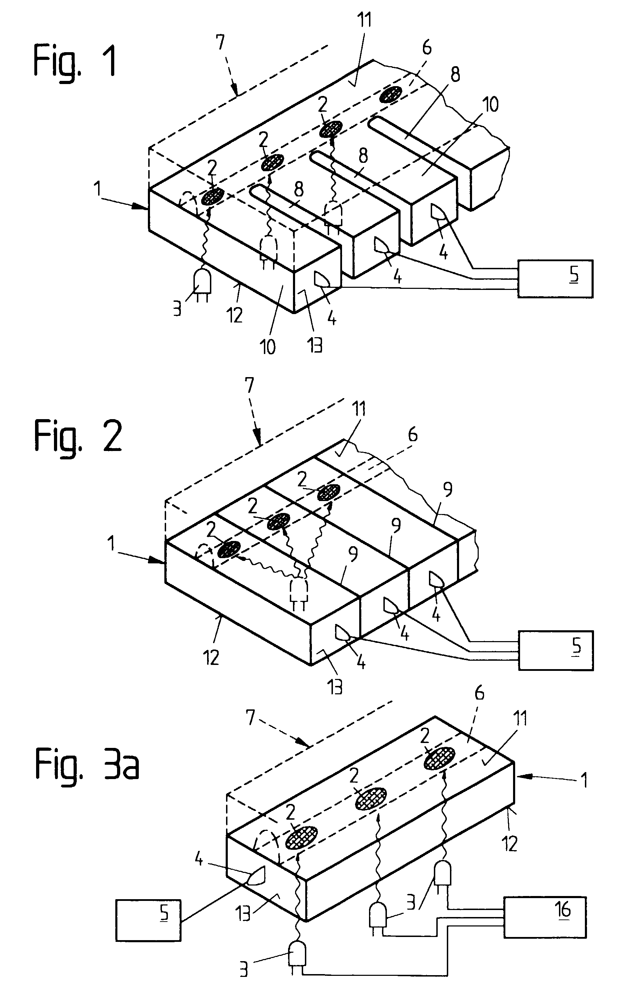

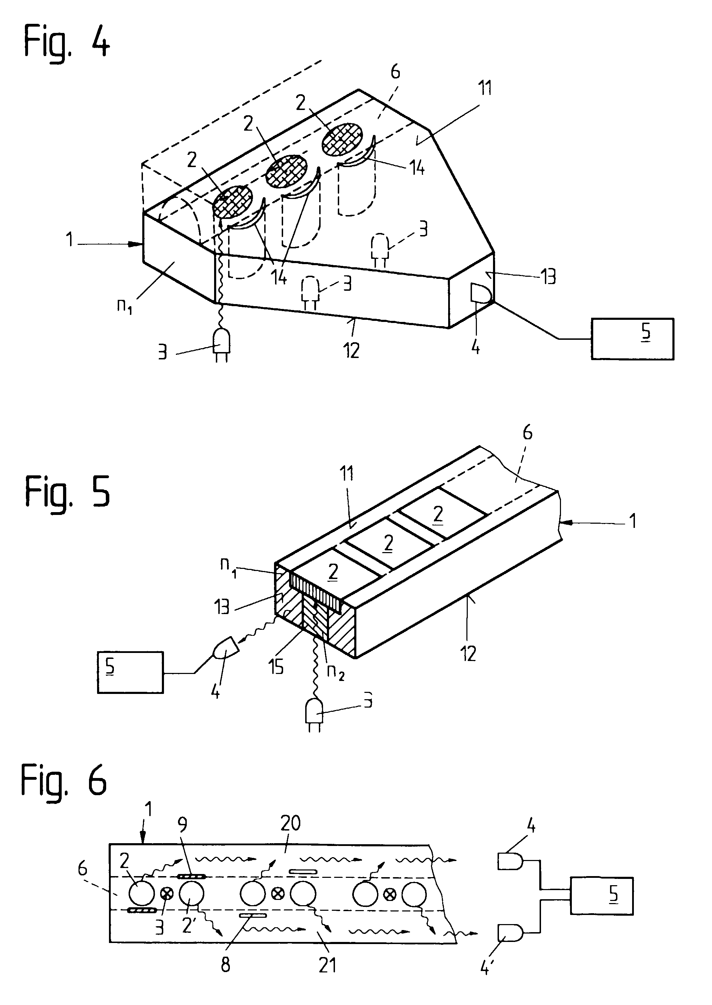

Die in den Fig. 3a bis 3c und Fig. 5 dargestellten Meßanordnungen dienen der Erläuterung der abhängigen Ansprüche 6-11, sind aber für sich genommen nicht Bestandteil der vorliegenden Erfindung.

Alle in den Fig. 1 bis 6 dargestellten Meßanordnungen weisen ein für die verwendete Anregungs- und Meßstrahlung transparentes Trägerelement 1 auf, wobei eine Grenzfläche 11 die lumineszenzoptischen Sensorelemente 2, 2' aufnimmt, durch die Grenzfläche 12 die Anregungsstrahlung eingestrahlt und durch die Grenzfläche 13 die Meßstrahlung abgegeben wird. Die Grenzfläche 12 ist daher der bzw. den Lichtquellen 3 und die Grenzfläche 13 der bzw. den Detektoren 4, 4' zugeordnet. Die Signale der Detektoren 4, 4' werden einer Auswerteeinheit 5 zugeführt. Die Richtung der Anregungsstrahlung steht im wesentlichen normal auf die Detektionsrichtung, wobei jedoch auch Winkel von 60 bis 120° zulässig sind. Alle Sensorelemente 2, welche vorzugsweise unterschiedliche Indikatormaterialien zur Messung unterschiedlicher Parameter aufweisen, sind durch einen gemeinsamen Probenkanal 6 verbunden. Der kapillare Probenkanal 6 sowie dessen Gehäusestruktur 7 sind nur schematisch angedeutet. Der Probenkanal kann einen quadratischen, rechteckigen oder im wesentlichen halbkreisförmigen Querschnitt aufweisen, wobei auch Erweiterungen im Bereich der einzelnen Sensorelemente 2, 2' zulässig sind.

Zur optischen Trennung der Lichtwege der von den einzelnen Sensorelementen 2 ausgehenden Meßstrahlung sind in der Ausführungsvariante gemäß Fig. 1 Einschnürungen oder Ausnehmungen 8 im Trägerelement 1 vorgesehen, dessen Brechungsindex n₁ größer ist als jener der Umgebung. Die einzelnen Sensorelemente 2 werden in diesem Ausführungsbeispiel gleichzeitig durch die Strahlungsquellen 3, beispielsweise LEDs, angeregt. Es ist jedoch auch möglich, nur eine Strahlungsquelle (siehe Fig. 2) zu verwenden, falls mit einer einzigen Quelle die unterschiedlichen Indikatormaterialien in den Sensorelementen 2 angeregt werden können. Das Trägerelement gemäß Fig. 1 weist eine Kammstruktur auf, an deren seitlicher Basis die einzelnen vom gemeinsamen Probenkanal 6 verbundenen Sensorelemente angeordnet sind. Die fingerartigen, prismatischen Fortsätze 10 sind mit ihren Stirnflächen jeweils einem Detektor 4 zugeordnet.

Die Ausführungsvariante gemäß Fig. 2 unterscheidet sich von jener nach Fig. 1 dadurch, daß die einzelnen, jeweils ein Sensorelement 2 tragenden Bereiche des Trägerelementes 1 durch für die Meßstrahlung undurchlässige Schichten 9 oder Verspiegelungen unterteilt sind. Dadurch wird eine ungeordnete Erfassung der Meßstrahlung durch die einzelnen Detektoren 4 verhindert.

Die Meßanordnungen gemäß Fig. 3a bis Fig. 3c zeichnen sich durch ein sehr einfach gestaltetes Trägerelement 1 aus, welches beispielsweise quaderförmig ausgebildet sein kann. Auf einer der länglichen Grenzflächen 11 sind die einzelnen Sensorelemente 2 angeordnet, wobei jeweils durch die Grenzflächen 12 bzw. 13 die Anregungsstrahlung eingestrahlt bzw. die Meßstrahlung detektiert wird. Ein zweiter ähnlicher Bauteil bzw. Gehäuse 7, in welchem der Probenkanal 6 beispielsweise nutförmig eingelassen ist, kann mit dem Trägerelement 1 z. B. verklebt oder durch andere geeignete Mittel verbunden sein.

Die Meßanordnung gemäß Fig. 3a verfügt über separate Strahlungsquellen 3 für jedes der Sensorelemente 2 und einen stirnseitig zugeordneten Detektor 4, wobei hier die Anregung über eine Einrichtung 16 zeitlich versetzt nach dem sogenannten Multiplexverfahren erfolgt. Gleichzeitige Messung im Zusammenhang mit der vorliegenden Erfindung bedeutet somit die Messung mehrerer Parameter im Rahmen einer Probenbeschickung des Probenkanals.

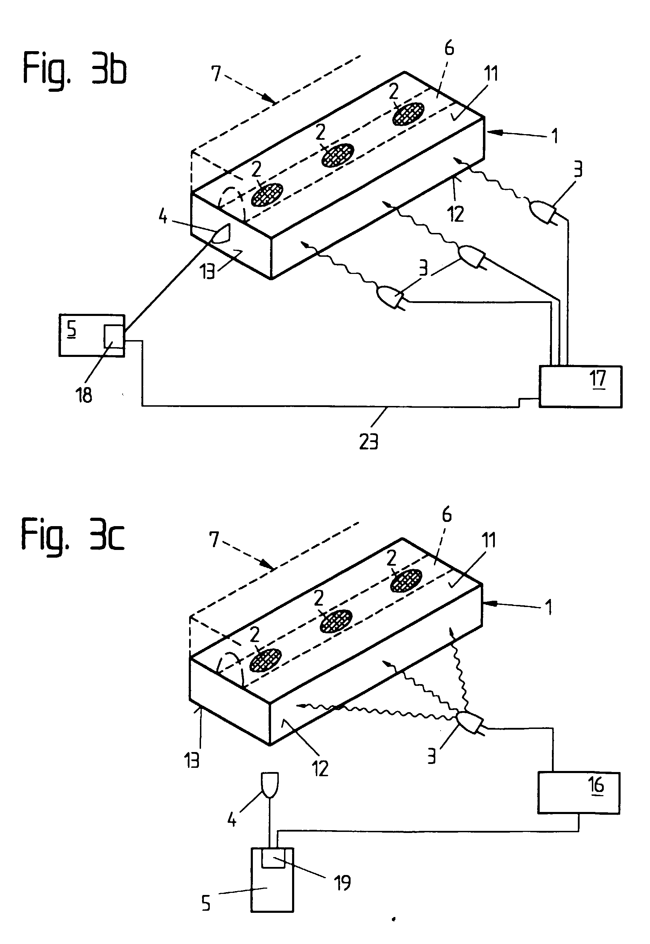

In Fig. 3b sind die einzelnen Strahlungsquellen einer Seitenfläche 12 des Trägerelementes zugeordnet, wobei die Anregung der einzelnen Sensorelemente entweder durch den evaneszenten Anteil der Anregungswelle oder durch geeignete Anpassung des Brechungsindex im Bereich der Sensorspots erfolgen kann. Bei dieser Meßanordnung wird die Anregungsstrahlung über die Einrichtung 17 periodisch moduliert, wobei über die Einrichtung 18 eine periodisch modulierte Erfassung der Meßstrahlung erfolgt. Die Einrichtungen 17 und 18 sind mit einer Signalleitung 23 verbunden, sodaß in der Auswerteeinheit die Messung des Phasenwinkels und/oder der Demodulation zwischen Anregungs- und Meßstrahlung erfolgen kann.

Schließlich zeigt Fig. 3c eine Meßanordnung, bei der allen Sensorelementen 2 eine gemeinsame, gepulste Strahlungsquelle 3 sowie ein gemeinsamer Detektor 4 zugeordnet ist. Nach der gemeinsamen, gepulsten Anregung aller Sensorelemente 2 erfolgt die Detektierung durch zeitlich versetzte Meßpunkte bzw. Meßfenster. Bei dieser Variante sollte jedoch die mittlere Zeitkonstante der Abklingzeit der einzelnen Sensorelemente signifikant unterschiedlich sein. Dem Detektor 4 kann eine Einrichtung 19 zur mathematischen Auftrennung der Abklingzeitfunktionen der einzelnen Sensorelemente nachgeschaltet sein.

Bei der Ausführungsvariante nach Fig. 4 weist das Trägerelement 1 im Lichtweg der Meßstrahlung jedes Sensorelementes 2 ein optoelektronisches Schaltelement 14 auf. Durch dieses Schaltelement kann jeweils nur ein bestimmter Lichtweg eines der Sensorelemente 2 zum Detektor 4 freigegeben werden.

Eine Variante der Meßanordnungen nach Fig. 3a bis 3c wird in Fig. 5 dargestellt. Das Trägerelement 1 weist im Bereich der Sensorelemente 2 abgegrenzte Bereiche 15 auf, deren Brechungsindex n₂ größer ist als der Brechungsindex n₁ des eigentlichen Trägerelementes. Über die Bereiche 15 mit dem größeren Brechungsindex n₂ kann die Zufuhr der Anregungsstrahlung direkt und/oder mittels Totalreflexion erfolgen. Die in alle Raumrichtungen emittierte Fluoreszenzstrahlung gelangt unter anderem in die seitlichen Bereiche des Trägerelementes 1 und wird dort direkt und/oder mittels Totalreflexion an eine der beiden Stirnflächen 13 abgeleitet und vom Detektor 4 erfaßt.

Eine sehr kompakte Ausführungsvariante wird in Fig. 6 dargestellt. Hier werden jeweils zwei Sensorelemente 2, 2' zu Zweiergruppen zusammengefaßt, wobei jeder dieser Gruppen eine separate Strahlungsquelle 3 zugeordnet ist. Auf diese Art können in einer kompakten Bauform, beispielsweise bis zu acht unterschiedliche Sensorelemente, durch bis zu vier Leuchtdioden angeregt werden. Jedem ersten Sensorelement 2 einer Zweiergruppe ist über einen ersten Lichtweg 20 im Trägerelement 1 ein erster Detektor 4 zugeordnet, und jedem zweiten Sensorelement 2' über einen zweiten Lichtweg 21 ein zweiter Detektor 4'. Ausnehmungen 8 oder lichtundurchlässige Schichten 9 können zur Sperrung des jeweiligen anderen Lichtweges verwendet werden. Die Trennung der Lichtwege unterschiedlicher Zweiergruppen von Sensorelementen 2, 2' kann durch zeitlich versetzte Anregung der einzelnen Zweiergruppen aber auch beispielsweise durch modulierte Anregung und Detektion erfolgen.

## Patentansprüche

1. Meßanordnung mit zumindest einer Strahlungsquelle (3) zur Bereitstellung einer Anregungsstrahlung, mit einem ersten lumineszenzoptischen Sensorelement (2), mit zumindest einem Detektor (4), einer Auswerteeinheit (5) zur Detektion einer Meßstrahlung und einem für die Anregungs- und die Meßstrahlung transparenten Trägerelement (1), welches eine erste Grenzfläche (11) zur Anbringung des lumineszenzoptischen Sensorelementes (2), eine zweite Grenzfläche (12) zur Aufnahme der Anregungsstrahlung sowie eine dritte Grenzfläche (13) zur Abgabe der Meßstrahlung des Sensorelementes (2) an den Detektor (4) aufweist, wobei die Richtung der Anregungsstrahlung mit der Detektionsrichtung einen Winkel zwischen 60° und 120°, vorzugsweise einen Winkel von im wesentlichen 90°, einschließt und der Brechungsindex (n₁) des Trägerelementes größer ist, als jener der Umgebung, **dadurch gekennzeichnet,** daß auf der ersten Grenzfläche (11) zumindest ein weiteres, vorzugsweise vom ersten unterschiedliches, durch einen gemeinsamen Probenkanal (6) verbundenes, lumineszenzoptisches Sensorelement (2) angeordnet ist, sowie daß im Trägerelement (1) eine Einrichtung (8; 9; 14) zur optischen Trennung der Lichtwege der Meßstrahlung der einzelnen Sensorelemente (2) vorgesehen ist.

2. Meßanordnung nach Anspruch 1, **dadurch gekennzeichnet,** daß die Einrichtung zur optischen Trennung der Lichtwege der von den einzelnen Sensorelementen (2) ausgehenden Meßstrahlung aus Einschnürungen (8), Ausnehmungen und/oder für die Meßstrahlung undurchlässigen Schichten (9) oder Bereichen des Trägerelementes (1) besteht, welche entlang des Probenkanales (6) angeordnet sind und jeweils normal zu diesem verlaufen, wobei jedem Sensorelement (2) ein Detektor (4) der Auswerteeinheit (5) zugeordnet ist.

3. Meßanordnung nach Anspruch 2, **dadurch gekennzeichnet,** daß die Einschnürungen (8) des Trägerelementes (1) im wesentlichen eine Kammstruktur bilden, an deren seitlicher Basis die einzelnen Sensorelemente (2) angeordnet sind, wobei die Kammstruktur im Bereich jedes Sensorelementes (2) einen im wesentlichen prismatischen Fortsatz (10) aufweist, dessen Stirnfläche einem Detektor (4) zugeordnet ist.

4. Meßanordnung nach Anspruch 1, **dadurch gekennzeichnet,** daß die Einrichtung zur optischen Trennung der Lichtwege zumindest ein optoelektronisches Schaltelement (14) im Trägerelement (14) aufweist, welche Schaltelemente (14) jeweils im Lichtweg der Meßstrahlung zwischen Sensorelement (2) und Detektor (4) angeordnet sind und jeweils nur einen Lichtweg eines Sensorelementes (2) zum Detektor (4) der Auswerteeinheit (5) freigeben.

5. Meßanordnung nach Anspruch 1, **dadurch gekennzeichnet,** daß jedem Sensorelement (2) eine separate Strahlungsquelle (3) sowie allen Sensorelementen (2) ein gemeinsamer Detektor (4) zugeordnet ist.

6. Meßanordnung nach Anspruch 5, **gekennzeichnet durch** eine elektronische Steuereinrichtung (16), mit welcher die separaten Strahlungsquellen (3) zu einer zeitlich versetzten Abgabe der Anregungsstrahlung verbunden sind.

7. Meßanordnung nach Anspruch 5, **gekennzeichnet durch** eine elektronische Einrichtung (17) zur periodischen Modulation der Anregungsstrahlung, welche mit den separaten Strahlungsquellen (3) verbunden ist, eine Einrichtung (18) zur periodisch modulierten Erfassung der Meßstrahlung, welche mit dem Detektor (4) verbunden ist sowie eine Einrichtung zur Messung des Phasenwinkels und/oder der Demodulation zwischen Anregungs- und Meßstrahlung.

8. Meßanordnung nach Anspruch 5, **gekennzeichnet durch** eine Einrichtung zur gepulsten Anregung der Sensorelemente (2), welche mit den separaten Strahlungsquellen (3) verbunden ist sowie eine Einrichtung zur zeitaufgelösten Erfassung der Meßstrahlung, welche mit dem Detektor (4) in Verbindung steht.

9. Meßanordnung nach einem der Ansprüche 5 bis 8, **dadurch gekennzeichnet,** daß das Trägerelement(1) im Bereich jedes Sensorelementes (2) abgegrenzte Bereiche (15) aufweist, deren Brechungsindex (n₂) größer ist als der Brechungsindex (n₁) des Trägerelementes (1) außerhalb dieser Bereiche, wobei die Bereiche (15) mit Brechungsindex (n₂) zur Zufuhr der Anregungsstrahlung und die übrigen Bereiche des Trägerelementes (1) mit Brechungsindex (n₁) zur Abfuhr der Meßstrahlung dienen.

10. Meßanordnung nach Anspruch 1, **gekennzeichnet durch** eine gemeinsame, gepulste Strahlungsquelle (3) für alle Sensorelemente (2) sowie eine Einrichtung zur zeitlich versetzten Detektierung der Meßstrahlung, wobei alle Sensorelemente (2) mit einem gemeinsamen Detektor (4) in optischer Verbindung stehen.

11. Meßanordnung nach Anspruch 1, **dadurch gekennzeichnet,** daß der Detektor (4) eine Einrichtung zur gleichzeitigen Erfassung der Abklingzeitprofile aller Sensorelemente (2) sowie die Auswerteeinheit (5) eine Einheit (19) zur mathematischen Auftrennung der Abklingzeitfunktionen der einzelnen Sensorelemente (2) aufweist, wobei alle Sensorelemente (2) mit dem gemeinsamen Detektor (4) in optischer Verbindung stehen.

12. Meßanordnung nach Anspruch 1, **dadurch gekennzeichnet,** daß die Sensorelemente (2, 2') zu Zweiergruppen zusammengefaßt sind, wobei jeder dieser Gruppen eine separate Strahlungsquelle (3) zugeordnet ist, daß die Auswerteeinheit (5) mit zwei Detektoren (4, 4') verbunden ist, wobei jedem ersten Sensorelement (2) einer Zweiergruppe über einen ersten Lichtweg (20) im Trägerelement (1) ein erster Detektor (4) und jedem zweiten Sensorelement (2') über einen zweiten Lichtweg (21) im Trägerelement (1) ein zweiter Detektor (4') zugeordnet ist, sowie daß eine Einrichtung zur zeitlich versetzten Anregung der Zweiergruppen vorgesehen ist.

## Claims

1. Measuring system comprising at least one radiation source (3) for supplying excitation radiation, and a first luminescence-optical sensor element (2), and at least one detector (4), and an evaluation unit (5) for the detection of measurement radiation, and a supporting element (1) transparent to excitation and measurement radiation, which is provided with a first boundary face (11) carrying the luminescence-optical sensor element (2), and a second boundary face (12) picking up the excitation radiation, and a third boundary face (13) transmitting the measurement radiation of the sensor element (2) to the detector (4), the direction of the excitation radiation being at an angle of between 60° and 120° relative to the direction of detection, and preferably at an angle of 90° essentially, and the refractive index (n₁) of the supporting element being greater than that of the environment, **characterized in that** at least one other luminescence-optical sensor element (2), which preferably differs from the first one, is positioned on the first boundary face (11), which second element is connected with the first element by a common sample channel (6), and that means (8; 9; 14) are provided in the supporting element (1) for optical separation of the light paths of the measurement radiations of the individual sensor elements (2).

2. Measuring system according to claim 1, **characterized in that** the means for optically separating the light paths of the measurement radiations emitted by the individual sensor elements (2), is constituted by constrictions (8), recesses and/or layers (9) or regions of the supporting element (1) that are impervious to measurement radiation, which are arranged along the sample channel (6) and run normal thereto, each sensor element (2) being assigned a detector (4) of the evaluation unit (5).

3. Measuring system according to claim 2, **characterized in that** the constrictions (8) of the supporting element (1) essentially have a comb structure carrying the individual sensor elements (2) along its lateral base, the comb structure featuring an essentially prism-shaped projection (10) in the area of each sensor element (2), whose front face is furnished with a detector (4).

4. Measuring system according to claim 1, **characterized in that** the means for optical separation of the light paths has at least one optoelectronic switching element (14) in the supporting element (1), which switching elements (14) are positioned in the light path of the measurement radiation between sensor element (2) and detector (4) and will open only one light path at a time between a sensor element (2) and the detector (4) of the evaluation unit (5).

5. Measuring system according to claim 1, **characterized in that** each sensor element (2) is provided with a separate radiation source (3), and all sensor elements (2) are assigned one common detector (4).

6. Measuring system according to claim 5, **characterized in that** an electronic control unit (16) is provided, to which the separate radiation sources (3) are connected, permitting the time-sequenced emission of excitation radiation.

7. Measuring system according to claim 5, **characterized in that** it includes an electronic device (17) for periodic modulation of the excitation radiation, which is connected to the separate radiation sources (3), and a device (18) for periodically modulated detection of the measurement radiation, which is connected to the detector (4), and a device for measuring the phase angle and/or the demodulation between excitation and measurement radiation.

8. Measuring system according to claim 5, **characterized in that** a device for pulsed excitation of the sensor elements (2) is provided, which is connected to the individual radiation sources (3), in addition to a device for time-resolved detection of the measuring radiation, which is connected to the detector (4).

9. Measuring system according to any of claims 5 to 8, **characterized in that** the supporting element (1) features delimited regions (15) in the area of each sensor element (2), whose refractive index (n₂) is greater than the refractive index (n₁) of the supporting element (1) outside of said regions, the regions (15) with refractive index (n₂) being used to feed in excitation radiation, and the remaining regions of the supporting element (1) with refractive index (n₁) to carry off measurement radiation.

10. Measuring system according to claim 1, **characterized in that** a common, pulsed radiation source (3) is provided for all sensor elements (2), and that a device is provided for time-sequenced detection of the measurement radiation, all sensor elements (2) being optically connected to a common detector (4).

11. Measuring system according to claim 1, **characterized in that** the detector (4) is provided with a device for simultaneous detection of the decay time profiles of all sensor elements (2), and that the evaluation unit (5) includes a subunit (19) for mathematical splitting of the decay time functions of the individual sensor elements (2), all sensor elements (2) being optically connected to the common detector (4).

12. Measuring system according to claim 1, **characterized in that** the sensor elements (2, 2') are combined into pairs, each pair being assigned a separate radiation source (3), and that the evaluation unit (5) is connected to two detectors (4, 4'), each first sensor element (2) of a pair being assigned a first detector (4) via a first light path (20) in the supporting element (1), and each second sensor element (2') being assigned a second detector (4') via a second light path (21) in the supporting element (1), and that a means be provided for time-sequenced excitation of the individual pairs.

## Revendications

1. Agencement de mesure avec au moins une source de rayonnement (3) pour fournir un rayonnement d'excitation, un premier élément capteur optique à luminescence (2) et au moins un détecteur (4) pour détecter un rayonnement de mesure associé avec une unité d'exploitation des données (5), et un élément de support transparent (1) pour le rayonnement d'excitation et de mesure ayant une première surface de séparation (11) pour recevoir les éléments capteurs optiques à luminescence (2), une seconde surface de séparation (12) pour recevoir le rayonnement d'excitation, ainsi qu'une troisième surface de séparation (13) pour amener le rayonnement de mesure des éléments capteurs (2) vers le détecteur (4), la direction du rayonnement d'excitation et la direction de détection formant un angle entre 60 et 120 ° et, de préférence, un angle sensiblement de 90 ° et l'indice de réfraction de l'élément de support étant supérieur à celui de son environnement, **caractérisé en ce que ,** sur une première surface de séparation, il y a au moins un autre élément capteur optique à luminescence, de préférence différent du premier et en communication avec le premier par un canal (6) destiné à l'échantillon et que, dans l'élément de support (1) il y a un dispositif (8 ; 9 ; 14) pour séparer la trajectoire optique des rayonnements de mesure des éléments capteurs individuels (2).

2. Agencement de mesure selon la revendication 1, **caractérisé en ce que** le dispositif pour la séparation optique des trajets de lumière des rayonnements partant des éléments capteurs individuels (2) est agencé sous la forme de gorges ou de rainures (8) et/ou de couches ou de régions (9) opaques aux rayonnements de l'élément de support (1), qui sont disposées le long du canal (6) pour l'échantillon perpendiculairement à celui-ci et qu'un détecteur (4) d'une unité d'exploitation (5) est prévu pour chaque élément capteur (2).

3. Agencement de mesure selon la revendication 2, **caractérisé en ce que** les gorges (8) de l'élément de support (1) peuvent former essentiellement une structure de peigne avec les éléments capteurs individuels (2) venant se loger latéralement sur la base et en ce que la structure de peigne a dans la région de chaque élément capteur (2) un prolongement (10) sensiblement prismatique dont la surface avant fait face à un détecteur (4).

4. Agencement de mesure selon la revendication 1, **caractérisé en ce que** le dispositif pour assurer la séparation optique des rayonnements comporte au moins un élément commutateur optoélectronique (14) dans l'élément de support (1), chaque élément (14) étant disposé sur le trajet optique du rayonnement de mesure entre un élément capteur (2) et le détecteur (4) pour qu'un seul trajet optique puisse être ouvert à un moment donné entre un élément capteur (2) et le détecteur (4) de l'unité d'exploitation (5).

5. Agencement de mesure selon la revendication **1, caractérisé en ce que** chaque source de rayonnement séparée (3) est associée à chaque élément capteur (2) et que l'ensemble des éléments capteurs (2) est associé à un détecteur commun (4).

6. Agencement de mesure selon la revendication 5, **caractérisé en ce qu**'un dispositif de commande électronique (16) coopère avec les sources de rayonnement séparées (3) pour une émission des rayonnements d'excitation programmée dans le temps.

7. Agencement de mesure selon la revendication 5, **caractérisé en ce qu**'il comprend un dispositif électronique (17) assurant une modulation périodique des rayonnements d'excitation, qui est associé avec des sources de rayonnement séparées (3), un dispositif (18) pour recevoir les rayonnements de mesure modulés périodiquement qui est associé avec le détecteur (4), ainsi qu'un dispositif pour mesurer l'angle de phase et / ou assurer la démodulation du rayonnement d'excitation et du rayonnement de mesure.

8. Agencement de mesure selon la revendication 5, **caractérisé en ce qu**'il comprend un dispositif pour exciter de manière pulsée les éléments capteurs (2), qui coopère avec les sources de rayonnement séparées (3), ainsi qu'un dispositif pour saisir de manière programmée dans le temps le rayonnement de mesure, qui coopère avec le détecteur (4).

9. Agencement de mesure selon l'une des revendications 5 à 8, **caractérisé en ce que** l'élément de support (1) présente, dans la région de chaque élément capteur (2), une région limitée (15) dont l'indice de réfraction (n₂) est supérieur à l'indice de réfraction (n₁) de l'élément de support (1) en dehors de cette région, la région (15) avec un indice de réfraction (n₂) servant à recevoir le rayonnement d'excitation et la région restante de l'élément de support (1) avec l'indice de réfraction (n₁) servant à l'évacuation des rayonnements de mesure.

10. Agencement de mesure selon la revendications 1, **caractérisé en ce qu**'il comprend une source de rayonnement pulsé (3) commune pour tous les éléments capteurs (3), ainsi qu'un dispositif pour détecter de manière programmée dans le temps le rayonnement de mesure, l'ensemble des éléments capteurs (4) coopérant optiquement avec un détecteur commun (4).

11. Agencement de mesure selon la revendication 1, **caractérisé en ce que** le détecteur (4) comprend un dispositif pour saisir simultanément le profil des courbes de retour à zéro de tous les éléments capteurs (2), et que l'unité d'exploitation (5) comprend une unité (19) pour la séparation mathématique des courbes de retour à zéro des éléments capteurs individuels (2), tous les éléments capteurs (2) coopérant optiquement avec le détecteur commun (4).

12. Agencement de mesure selon la revendication 1, **caractérisé en ce que** les éléments capteurs (2, 2') sont disposés en groupes de deux, chacun de ces groupes ayant une source de rayonnement séparée (3), que l'unité d'exploitation (5) coopère avec deux détecteurs (4, 4'), que chaque premier élément capteur (2) d'une paire coopère via un premier trajet optique (20) dans l'élément de support (1) avec un premier détecteur (4) et chaque second élément capteur (2') coopère via un second trajet optique (21) dans l'élément de support (1) avec un second détecteur (4'), et qu'un dispositif est prévu pour assurer une excitation des groupes, programmée dans le temps.
